(19) **Europäisches Patentamt European Patent Office Office européen des brevets**

(11) **EP 2 051 433 A1**

(12) **EUROPEAN PATENT APPLICATION**
published in accordance with Art. 153(4) EPC

(43) Date of publication:
**22.04.2009 Bulletin 2009/17**

(21) Application number: **07817331.7**

(22) Date of filing: **28.11.2007**

(51) Int Cl.:
**H04L 9/00** (2006.01)

(86) International application number:
**PCT/CN2007/071141**

(87) International publication number:
**WO 2008/067751 (12.06.2008 Gazette 2008/24)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.12.2006 CN 200610160964**

(71) Applicant: **Huawei Technologies Co., Ltd.
Longgang District, Shenzhen
Guangdong 518129 (CN)**

(72) Inventor: **WAN, Changsheng
Shenzhen Guangdong 518129 (CN)**

(74) Representative: **Körber, Martin Hans
Mitscherlich & Partner
Sonnenstrasse 33
80331 München (DE)**

(54) **A METHOD, DEVICE AND SYSTEM FOR GENERATING AND DISTRIBUTING THE KEY BASED ON THE DIAMETER SERVER**

(57)     A method for generating and distributing keys based on the Diameter server in the mobile communication field is disclosed herein. The MN sends the NAR identifier to the PAR; after receiving the identifier, the PAR sends the NAR identifier and the MN identifier to the Diameter server; after receiving the identifiers, the Diameter server generates a random number first, then generates a shared key according to the random key, and then sends the shared key to the NAR and sends the random number to the MN; after receiving the random number, the MN generates a shared key. An apparatus and system for generating and distributing keys based on the Diameter server are also disclosed herein. The technical solution under the present invention avoids the domino effect and enhances security of the shared key.

The MN sends an HKReq message carrying a NAR_ID to the PAR — 401

After receiving the HKReq message, the PAR generates the first AAA req message and sends it to the Diameter server — 402

After receiving the first AAA req message, the Diameter server generates a random number and then generates a shared key according to the random number — 403

The Diameter server sends the shared key to the NAR — 404

After receiving the key, the NAR returns the second response message — 405

The Diameter server sends the selected random number to the PAR — 406

The PAR forwards the random number to the MN — 407

The MN generates a shared key according to the received random number — 408

Figure 4

**Description**

FIELD OF THE INVENTION

The present invention relates to mobile communication, and in particular, to a method, an apparatus, and a system for generating and distributing keys based on a Diameter server.

BACKGROUND

The MIP6 protocol provides a method for a Mobile Node (MN) to communicate through a home IP address while the MN roams in an Internet Protocol version 6 (IPv6) network. The method requires the MN to register a Care-of-Address (CoA) at the Home Agent (HA) when the MN moves to a foreign network. When an MN hands over from a foreign access router to another router, the MN needs to regain the CoA and register the CoA at the HA. The solution provided by the basic protocol of the MIP6 is to obtain the new CoA only after the MN moves to the New Access Router (NAR).
The basic protocol of the MIP6 is defective in the following aspects:

(1) The MN obtains the CoA only after moving to a new router. Before the MN obtains the new CoA, the communication between the MN and the communication node is interrupted, thus leading to a long handover delay.
(2) In the time period after the MN hands over to the new router before the MN registers the new CoA at the HA, the packets directed toward the MN are still routed to the old CoA of the MN. Because the old CoA is no longer available, the packets directed toward the MN are discarded.

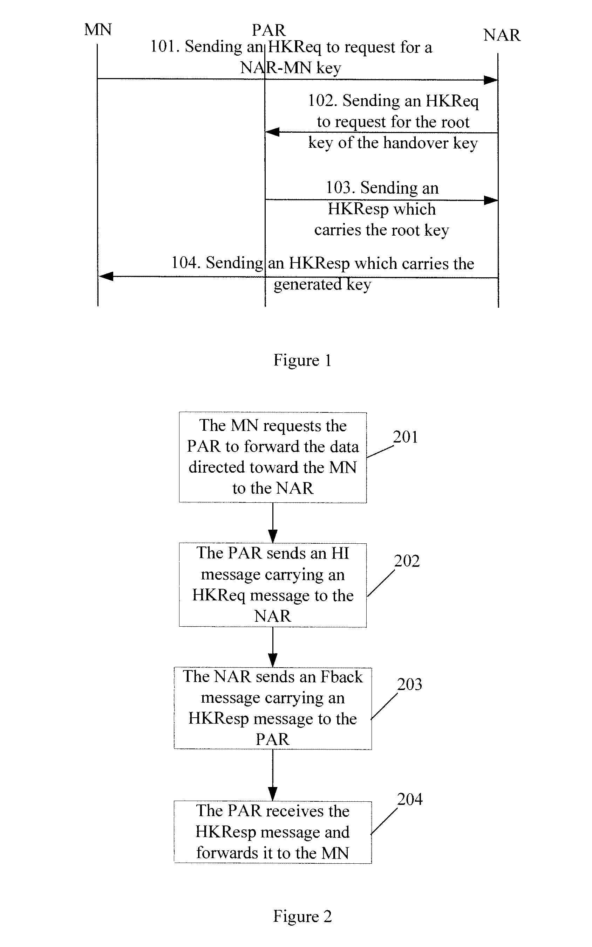

The FMIP6 protocol extends the basic protocol of the MIP6, and solves the foregoing problem of the MIP6 protocol. The FMIP6 protocol provides a method of obtaining the CoA from the NAR before the MN moves to the new router, thus reducing communication delay. The FMIP6 protocol also sets up a tunnel between the Previous Access Router (PAR) and the MN. The data directed toward the old CoA are routed to the MN through the tunnel.
In order to ensure security of data transmission between the PAR and the MN, a security association needs to be set up between the PAR and the MN. The linchpin of setting up the security association is to distribute a key shared between the PAR and MN.
A method for distributing a handover key is provided in the prior art. As shown in Figure 1, the method includes the following steps:

Step 101: The MN sends a Handover Key Request (HKReq) to the NAR, requesting a NAR-MN key.
Step 102: After receiving the HKReq, the NAR sends the HKReq message to the PAR, requesting a root key of the handover key.
Step 103: Through a Handover Key Response (HKResp), the PAR sends the root key of the handover key to the NAR.
Step 104: According to the root key, the NAR generates a NAR-MN key, and sends an HKResp to the MN.

The HKReq and HKResp messages may be a sub-option of the MIP6, and may be embedded in an FMIP6 message or MIP6 message and sent to the NAR.
The signaling in the foregoing method may be carried in the signaling of the FMIP6 protocol for transmitting. In this case, the key distribution signaling data is part of the FMIP6 signaling data. The foregoing method also provides a key distribution signaling transmission mode under the pre-handover mode and reaction mode.
As shown in Figure 2, a key distribution method in the pre-handover mode in the prior art includes the following steps:

Step 201: The MN attaches the HKReq directed toward the NAR into the Fast Binding Update (FBU) message, and sends the message to the PAR, requesting the PAR to forward the data directed toward the MN to the NAR.
Step 202: When the PAR sends a Handover Initiation (HI) message to the NAR, the HI message carries the HKReq message.
Step 203: After receiving the HKReq message, the NAR sends a Fast Binding Acknowledgement (FBack) to the PAR, and returns the HKResp message to the PAR.
Step 204: After receiving the HKResp message, the PAR sends the HKResp message to the MN.

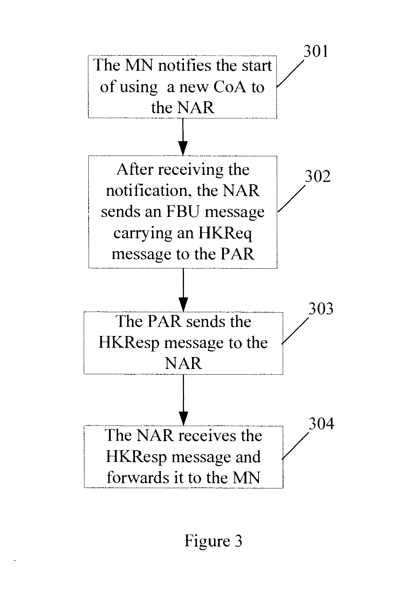

As shown in Figure 3, a key distribution method in the reaction mode in the prior art includes the following steps:

Step 301: The MN attaches an HKReq message into a Fast Neighbor Advertisement (FNA) message, and sends the FNA message to the NAR, notifying start of using a new CoA.

Step 302: After receiving the HKReq message, the NAR sends an FBU message carrying the HKReq message to the PAR.

Step 303: After receiving the HKReq message, the PAR sends the HKResp message to the NAR.

Step 304: After receiving the HKResp message, the NAR sends the HKResp message to the MN.

The following security problems are involved in the prior art:

Domino effect: Domino effect means that among the dominos placed together, the moment one of the dominoes collapses, all the remaining dominoes are affected and collapse consequently. The domino effect occurs when the NAR obtains the handover root key from the PAR. Once an Access Router (AR) in a domain is cracked, the handover key after the MN passes through the AR is vulnerable to interception.

Costly deployment: The PAR is responsible for authentication, which means that all ARs must be capable of authentication. Deploying such a network is rather costly.

SUMMARY

In order to enhance security of data transmission at the time of MN handover and relieve the costliness of network deployment, the present invention provides a method, an apparatus, and a system for generating and distributing keys based on the Diameter server.

The embodiments of the present invention are fulfilled through the following technical solution.

A method for generating and distributing keys based on a Diameter server in an embodiment of the present invention includes:

receiving, by the Diameter server, a message sent by the PAR before handover of the MN, where the message carries an identifier of a NAR after handover of the MN and an identifier of the MN;

generating a random number, and generating a key shared between the MN and NAR according to the random number;

sending the key shared between the MN and NAR to the NAR; and

sending the random number to the MN as a parameter for calculating the key shared between the MN and NAR.

A system for generating and distributing keys based on a Diameter server in an embodiment of the present invention includes: an MN, a PAR, a NAR, and a Diameter server.

The Diameter server includes:

a Diameter key generating module, adapted to generate a random number, and generate a key shared between the MN and NAR according to the random number; and

a sending module, adapted to send the shared key to the NAR, and send the random number to the MN as a parameter for calculating the key shared between the MN and NAR.

A Diameter server provided in an embodiment of the present invention includes:

a Diameter key generating module, adapted to generate a random number, and generate a key shared between the MN and NAR according to the random number; and

a sending module, adapted to send the shared key to the NAR, and send the random number to the MN as a parameter for calculating the key shared between the MN and NAR.

The technical solution under the present invention brings these benefits:

In this technical solution, the Diameter server does not send a key to the MN directly, but sends a random number instead, and the MN calculates the shared key, thus preventing the shared key from being obtained by the PAR and avoiding the domino effect in the prior art.

Because the generation of the shared key between the MN and NAR is never dependent of the PAR, the distribution of the key between the NAR and MN is not affected even if the PAR is cracked.

Moreover, in the embodiment of the present invention, it is not necessary for the PAR to perform authentication, thus reducing the expenses of network deployment.

BRIEF DESCRIPTION OF THE DRAWINGS

Figure 1 shows signaling transmission of a method for distributing handover keys in the prior art;

Figure 2 is a flowchart of a key distribution method in the pre-handover mode in the prior art;

Figure 3 is a flowchart of a key distribution method in the reaction mode in the prior art;

Figure 4 is a flowchart of a method for generating and distributing keys in an embodiment of the present invention; and

Figure 5 shows a system for generating and distributing keys in an embodiment of the present invention.

DETAILED DESCRIPTION

The present invention is hereinafter described in detail by reference to embodiments and accompanying drawings, but the present invention is not limited to the following embodiments.

A method and a system for generating and distributing keys based on a Diameter server are provided in an embodiment of the present invention. Before the MN moves to the next router, the Diameter server distributes a key to the MN and NAR, and the key is applied when the NAR becomes a PAR.

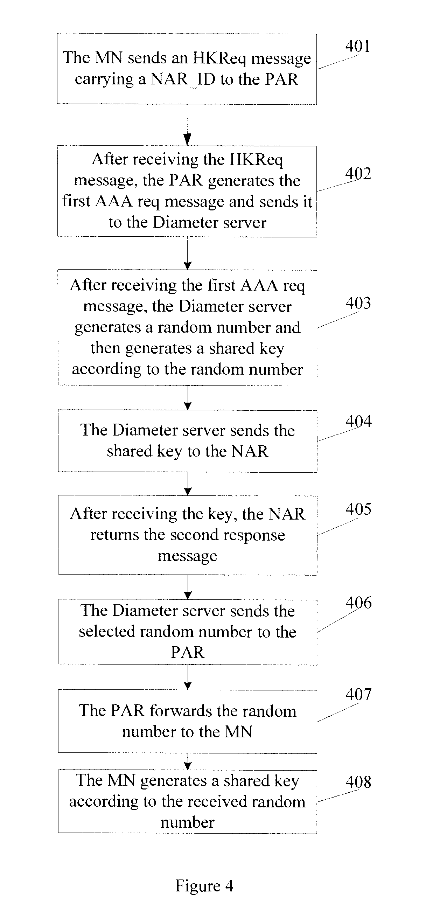

**[0026]** As shown in Figure 4, a method for generating and distributing keys based on a Diameter server includes the following steps.

Step 401: The MN sends an HKReq message to the PAR, where the HKReq message carries information on a NAR identifier (NAR_ID). The NAR_ID may be an IP address of the NAR.

Step 402: After receiving the HKReq, the PAR resolves the HKReq information, generates a first AAA req message, and sends the first AAA req message to the Diameter server.

The AAA req message is a Diameter message sent by the PAR to the Diameter server in order to request a handover key. The message carries a NAR_ID and an MN identifier (MN_ID). The MN_ID is generally an access identifier of the MN, and may be in this format: mn@home.net.

Step 403: After receiving the first AAA req message, the Diameter server generates a random number "nonce", and generates a shared key "NAR-MN-Key" through a PRF function by using the nonce, NAR_ID, AAA_ID, MN_ID, validity time, and AAA-MN-Key as input.

The nonce is a random number. The AAA_ID is an identifier of the Diameter server, and is generally an IP address of the Diameter server. The validity time is a validity period of the key. The PRF function is a pseudo random generation function, and it is difficult to deduce the input of the PRF function according to the output of the PRF function. The AAA-MN-Key is a key shared between the Diameter server and MN and the NAR-MN-Key is a key shared between the NAR and MN and expected to be generated in an embodiment of the present invention.

The formula for calculating the shared key is:

$$\text{NAR-MN-Key} = \text{PRF (AAA-MN-Key, nonce}|\text{NAR\_ID}|\text{AAA\_ID}|\text{MN\_ID}| \text{ validity time).}$$

Step 404: The Diameter server sends the NAR-MN-Key to the NAR through a second AAA req message.

Step 405: After receiving the second AAA req message, the NAR returns a second response message to the Diameter server.

Step 406: After receiving the second response message from the NAR, the Diameter server returns a first response message carrying "nonce" to the PAR.

**[0036]** Step 407: After receiving the first response message from the Diameter server, the PAR sends the "nonce" received from the Diameter server to the MN.

Step 408: After moving to the NAR, the MN calculates out the shared key "NAR-MN-Key" according to the "nonce". Likewise, the formula for calculating the shared key is:

$$\text{NAR-MN-Key} = \text{PRF (AAA-MN-Key, nonce}|\text{NAR\_ID}|\text{AAA\_ID}|\text{MN\_ID}| \text{ validity time).}$$

It is understandable to those skilled in the art that the MN may also calculate out the shared key "NAR-MN-Key" according to the "nonce" before moving to the NAR, which can cope with fast moving of the MN.

The technical solution to generating and distributing keys in an embodiment of the present invention is secure in that:

In step 402, the PAR does not generate any key. Instead, the Diameter server generates a key in the subsequent steps. Therefore, the key shared between the NAR and MN is not affected even if the PAR is cracked, thus preventing the domino effect.

In steps 406, 407 and 408, the Diameter server transmits the "nonce" value to the MN through the PAR. Therefore, the PAR knows only the nonce, and is unable to calculate out the NAR-MN-Key, thus preventing the NAR-MN-Key from being disclosed to the PAR.

**[0040]** Because a security association exists between the Diameter server and NAR, it is secure to distribute keys between them.

Moreover, the AR in this embodiment needs to support the Diameter client because the AR generally needs to support the access authentication function.

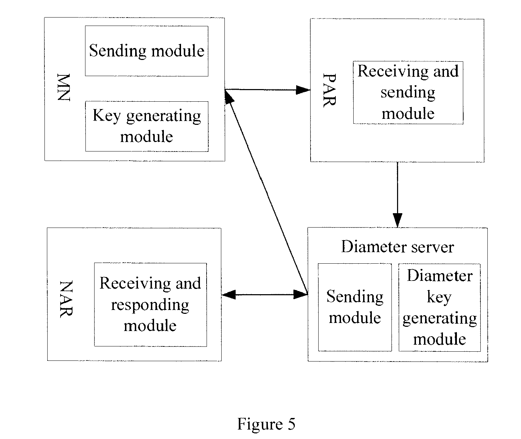

As shown in Figure 5, a system for generating and distributing keys based on a Diameter server in an embodiment of the present invention includes: an MN, a PAR, a NAR, and a Diameter server.

The MN includes:

a sending module, adapted to send a NAR_ID to a PAR; and
a key generating module, adapted to: receive a random number from a Diameter server, and generate a key shared between the MN and NAR according to the random number.

The PAR includes:

a receiving and sending module, adapted to: receive the NAR_ID from the MN, send the NAR_ID and MN_ID to the Diameter server, and forward the random number sent by the Diameter server to the MN.

The Diameter server includes:

a Diameter key generating module, adapted to: generate a random number, and generate a key shared between the MN and NAR according to the random number; and
a sending module, adapted to: send the key shared between the MN and NAR to the NAR, and send the random number to the MN.

The NAR includes:

a receiving and responding module, adapted to receive the key shared between the MN and NAR sent by the Diameter server, and send the received response message to the Diameter server.

In order to improve security, the Diameter server further includes:

a key calculating unit, adapted for the Diameter server to calculate the key shared between the MN and NAR according to the formula "shared key = PRF (key shared between the server and MN, random number | NAR_ID | Diameter server identifier | MN_ID | validity period of the key)".

Accordingly, the MN further includes:

a key calculating unit, adapted for the MN to calculate the key shared between the MN and NAR according to the formula "shared key = PRF (key shared between the server and MN, random number | NAR_ID | Diameter server identifier | MN_ID | validity period of the key)".

Although the invention has been described through several preferred embodiments, the invention is not limited to such embodiments. It is apparent that those skilled in the art can make various modifications and variations to the invention without departing from the spirit and scope of the invention. The invention is intended to cover the variations and substitutions provided that they fall in the scope of protection defined by the following claims or their equivalents.

**Claims**

1.  A method for generating and distributing keys based on a Diameter server, comprising:

    receiving, by the Diameter server, a message sent by a Previous Access Router ,PAR, before handover of a Mobile Node ,MN, wherein the message carries a New Access Router , NAR, identifier, abbreviated as NAR_ID, after the handover of the MN, and an MN identifier, MN_ID;

    generating a random number, and generating a key shared between the MN and the NAR according to the random number;

    sending the key shared between the MN and the NAR to the NAR; and

    sending the random number to the MN as a parameter for calculating the key shared between the MN and the NAR.

2.  The method for generating and distributing keys based on the Diameter server according to claim 1, wherein:

    before the Diameter server receives the message sent by the PAR prior to the handover of the MN, the PAR receives the NAR_ID sent by the MN.

3.  The method for generating and distributing keys based on the Diameter server according to claim 1 or claim 2, wherein the NAR_ID is an IP address of the NAR.

4.  The method for generating and distributing keys based on the Diameter server according to claim 1, wherein the MN_ID is an access identifier of the MN.

5.  The method for generating and distributing keys based on the Diameter server according to claim 1, wherein a security association exists between the Diameter server and the NAR.

6.  The method for generating and distributing keys based on the Diameter server according to claim 1, wherein the MN generates a key shared with the NAR according to the random number after receiving the random number and before moving to the NAR.

7.  The method for generating and distributing keys based on the Diameter server according to claim 1, wherein the MN generates a key shared with the NAR according to the random number after receiving the random number and moving to the NAR.

8.  The method for generating and distributing keys based on the Diameter server according to claim 1, claim 2, claim 4, claim 5, claim 6, or claim 7, wherein a function used for generating the key shared between the MN and NAR is a pseudo random generation function.

9.  The method for generating and distributing keys based on the Diameter server according to claim 8, wherein a formula for generating the key shared between the MN and the NAR is:

    shared key = PRF (key shared between the server and the MN, random number | NAR_ID | Diameter server identifier | MN_ID | validity period of the key).

10. The method for generating and distributing keys based on the Diameter server according to claim 1, wherein a method of sending the random number to the MN comprises:

    sending, by the Diameter server, the random number to the PAR; and

    forwarding, by the PAR, the random number to the MN.

11. A system for generating and distributing keys based on a Diameter server, comprising: a Mobile Node, MN, a Previous Access Router , PAR, a New Access Router, NAR, and a Diameter server; wherein, the Diameter server comprises:

    a Diameter key generating module, adapted to generate a random number and generate a key shared between the MN and the NAR according to the random number; and

    a sending module, adapted to send the shared key to the NAR, and send the random number to the MN as a parameter for calculating the key shared between the MN and the NAR.

12. The system for generating and distributing keys based on the Diameter server according to claim 11, wherein the MN comprises:

a sending module, adapted to send a NAR identifier , NAR_ID, to the PAR; and
a key generating module, adapted to receive the random number from the Diameter server, and generate the key shared between the MN and the NAR according to the random number.

13. The system for generating and distributing keys based on the Diameter server according to claim 11, wherein the PAR comprises:

a receiving and sending module, adapted to receive the NAR_ID from the MN, send the NAR_ID and an MN identifier , MN_ID, to the Diameter server, and forward the random number sent by the Diameter server to the MN.

14. The system for generating and distributing keys based on the Diameter server according to claim 11, wherein the NAR comprises:

a receiving and responding module, adapted to receive the shared key sent by the Diameter server, and send a received response message to the Diameter server.

15. The system for generating and distributing keys based on the Diameter server according to any of claims 11-14, wherein the Diameter server further comprises:

a key calculating unit, adapted for the Diameter server to calculate the key shared between the MN and the NAR according to this formula: shared key = PRF (key shared between the server and the MN, random number | NAR_ID | Diameter server identifier | MN_ID | validity period of the key); and
the MN further comprises a key calculating unit, adapted for the MN to calculate the key shared between the MN and the NAR according to this formula: shared key = PRF (key shared between the server and the MN, random number | NAR_ID | Diameter server identifier | MN_ID | validity period of the key).

16. A Diameter server, comprising:

a Diameter key generating module, adapted to generate a random number, and generate a key shared between a Mobile Node, MN, and a New Access Router, NAR, according to the random number; and
a sending module, adapted to send the shared key to the NAR, and send the random number to the MN as a parameter for calculating the key shared between the MN and the NAR.

17. The Diameter server of claim 16, further comprising:

a key calculating unit, adapted to calculate the key shared between the MN and the NAR according to this formula: shared key = PRF (key shared between the server and the MN, random number | NAR_ID | Diameter server identifier | MN_ID | validity period of the key).

MN                    PAR                              NAR
        101. Sending an HKReq to request for a
                    NAR-MN key

                        102. Sending an HKReq
                        to request for the root
                        key of the handover key

                        103. Sending an
                            HKResp which
                        carries the root key

            104. Sending an HKResp which carries the
                        generated key

Figure 1

```
┌─────────────────────────┐
│   The MN requests the   │     201
│ PAR to forward the data │
│ directed toward the MN  │
│       to the NAR        │
└─────────────────────────┘
             │
             ▼
┌─────────────────────────┐
│  The PAR sends an HI    │     202
│   message carrying an   │
│  HKReq message to the   │
│          NAR            │
└─────────────────────────┘
             │
             ▼
┌─────────────────────────┐
│ The NAR sends an Fback  │     203
│   message carrying an   │
│  HKResp message to the  │
│          PAR            │
└─────────────────────────┘
             │
             ▼
┌─────────────────────────┐
│  The PAR receives the   │     204
│   HKResp message and    │
│  forwards it to the MN  │
└─────────────────────────┘
```

Figure 2

The MN notifies the start of using a new CoA to the NAR — 301

After receiving the notification, the NAR sends an FBU message carrying an HKReq message to the PAR — 302

The PAR sends the HKResp message to the NAR — 303

The NAR receives the HKResp message and forwards it to the MN — 304

Figure 3

The MN sends an HKReq message carrying a NAR_ID to the PAR — 401

After receiving the HKReq message, the PAR generates the first AAA req message and sends it to the Diameter server — 402

After receiving the first AAA req message, the Diameter server generates a random number and then generates a shared key according to the random number — 403

The Diameter server sends the shared key to the NAR — 404

After receiving the key, the NAR returns the second response message — 405

The Diameter server sends the selected random number to the PAR — 406

The PAR forwards the random number to the MN — 407

The MN generates a shared key according to the received random number — 408

Figure 4

Figure 5

# INTERNATIONAL SEARCH REPORT

| International application No. |
|---|
| PCT/CN2007/071141 |

**A. CLASSIFICATION OF SUBJECT MATTER**

H04L9/00 (2006.01) i

According to International Patent Classification (IPC) or to both national classification and IPC

**B. FIELDS SEARCHED**

Minimum documentation searched (classification system followed by classification symbols)

IPC: H04L9/-,H04Q7/-

Documentation searched other than minimum documentation to the extent that such documents are included in the fields searched

Electronic data base consulted during the international search (name of data base and, where practicable, search terms used)

CPRS, CNKI, WPI, EPODOC, PAJ: key?, server?, Diameter, node?, CR, NR, PAR, NAR, random, router?, RAND, MN, prior/current/old access router, posterior/new access router, access+

**C. DOCUMENTS CONSIDERED TO BE RELEVANT**

| Category* | Citation of document, with indication, where appropriate, of the relevant passages | Relevant to claim No. |
|---|---|---|
| A | CN1859087A (HUAWEI TECH CO LTD) 08 Nov.2006 (08.11.2006), see claim 1, fig.1 | 1-17 |
| A | CN1543118A (MATSUSHITA ELECTRIC IND CO LTD) 03 Nov.2004 (03.11.2004), see page 10 paragraph 7 in the description, fig.2 | 1-17 |
| A | JP2006246073A (JAPAN TELECOM CO LTD) 14 Sep.2006 (14.09.2006), see the whole document | 1-17 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 Jan.2008 (17.01.2008) | **14 Feb. 2008 (14.02.2008)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | ZHANG Yanqing Telephone No. (86-10)62411428 |

Form PCT/ISA/210 (second sheet) (April 2007)

<table>
<tr><td colspan="2"><strong>INTERNATIONAL SEARCH REPORT</strong><br>Information on patent family members</td><td colspan="2">International application No.<br><br>PCT/CN2007/071141</td></tr>
</table>

| Patent Documents referred in the Report | Publication Date | Patent Family | Publication Date |
|---|---|---|---|
| CN1859087A | 08.11.2006 | None | |
| CN1543118A | 03.11.2004 | JP2004297578A | 21.10.2004 |
| | | US2004228484A | 18.11.2004 |
| JP2006246073A | 14.09.2006 | None | |

Form PCT/ISA/210 (patent family annex) (April 2007)